# EUROPÄISCHE PATENTANMELDUNG

(11) **EP 2 180 330 A1**
(43) Veröffentlichungstag der Anmeldung: **28.04.2010**
(21) Anmeldenummer: 09168744.2
(22) Anmeldetag: 26.08.2009
(51) Int. Cl.: G01S 1/00, G01S 5/14

(54) **Verfahren und Navigationssystem zur schnellen Positionsbestimmung**

(30) Priorität: 21.10.2008 DE 102008042986
(71) Anmelder: Robert Bosch GmbH, 70442 Stuttgart (DE)
(72) Erfinder: Fischer, Kai, 31199 Diekholzen (DE); Vogel, Andreas, 31139 Hildesheim (DE); Schriefer, Frank, 31079 Sibbesse (DE); Mueller, Guido, 06484 Quedlinburg (DE); Arnold, Rolf, 31141 Hildesheim (DE); Arnold, Joerg, 30989 Gehrden (DE)

(57) **Zusammenfassung**

Es wird ein Verfahren zum Betreiben eines mobilen Navigationsgerätes (200) beschrieben, bei dem das mobile Navigationsgerät (200) in einer Fahrzeug-Konfiguration (101,102), in der das mobile Navigationsgerät (200) mit einer Zusatzvorrichtung (300,400) eines Fahrzeugs (600,700) gekoppelt ist, die jeweils aktuelle Position des jeweiligen Fahrzeugs (600,700) ermittelt. Dabei wird im Rahmen eines Wechsels zu einer mobilen Konfiguration (103), in der das mobile Navigations-gerät (200) von der jeweiligen Zusatzvorrichtung (300,400) entkoppelt ist, eine vom mobilen Navigationsgerät (200) aktuell ermittelte Fahrzeug-Position in Form einer der jeweiligen Fahrzeug-Konfiguration (101,102) zugeordneten Positionsinformation (511,521) gespeichert.

## Beschreibung

Bei satellitengestützten Navigationssystemen kommen Navigationsgeräte zum Einsatz, die zur Bestimmung ihrer geografischen Position von Satelliten ausgesendete Signale verwenden. Das Navigationsgerät berechnet seine Position dabei relativ zu den empfangenen Satelliten anhand von Laufzeitdifferenzen zwischen den Satellitensignalen, wobei für eine eindeutige Standortbestimmung, wenigstens vier Satelliten gleichzeitig empfangen werden müssen. Ferner muss das Navigationsgerät auch die genauen Himmelspositionen der jeweiligen Sender kennen, um seine Position absolut bestimmen zu können. Mithilfe des so genannten Map-Matching-Verfahrens, bei dem die ermittelte absolute Position in eine digitale Karte projeziert wird, können dem Anwender anschließend sowohl eine Routenberechnung als auch weitere standortbezogene Services angeboten werden.

Häufig liegen einem Navigationsgerät bei seiner Inbetriebnahme nur unzureichende Informationen über die aktuellen Satellitenpositionen vor. Dies ist insbesondere der Fall, wenn das Gerät länger außer Betrieb war oder wenn es über eine längere Strecke ohne Satellitenempfang transportiert wurde. In diesem Fall wird das Navigationsgerät eine spezielle Prozedur durchführen, bei der zunächst die zur Verfügung stehenden Empfangskanäle nach Satellitensignalen durchsucht, die gefundenen Satelliten anhand ihrer Signale identifiziert und die genaue Himmelspositionen der geeigneten Satelliten ermittelt werden. Eine solche Positionsbestimmung kann ferner durch Störfaktoren, wie beispielsweise eine Minderung der Empfangsqualität aufgrund unzu-reichender Sicht oder Signal-Reflexion, noch weiter verzögert werden. Daher erweist sich eine solche Prozedur in der Praxis als relativ zeit-aufwändig. So kann die TTFF-Dauer (time-tofirst-fix), also die Zeit bis zur ersten Positionsbestimmung, bei einem Kaltstart durchaus mehre-re Minuten betragen. Auch die eigentliche Navigation, bei der das Ge-rät die aktuelle Fahrzeug-Position als Startposition für eine Routenführung zu einer gewünschten Zielposition verwendet, kann in diesem Fall erst nach einer entsprechend langen Verzögerung erfolgen.

Ein mobiles Navigationsgerät, wie beispielsweise PND (Personal Navigation Device), zeichnet sich durch die Möglichkeit aus, in verschiedenen Konfigurationen eingesetzt zu werden. So kann ein solches Gerät beispielsweise sowohl in einer Fahrzeug-Konfiguration, bei der das Gerät in einem Fahrzeug installiert ist, als auch in einer mobilen Konfiguration als Handgerät betrieben werden. Da solche mobilen Empfangsgeräte in der Regel auch im ausgeschalteten Zustand transportiert werden, kommt es vor, dass die im Navigationsgerät gespeicherte letzte Position nicht mit der tatsächlichen Position des Gerätes übereinstimmt. Beispielsweise liegt einem zunächst im Fußgängermodus verwendeten und anschließend im ausgeschalteten Zustand transportierten Navigationsgerät bei seiner Inbetriebnahme in einer Fahrzeughalterung nur die gespeicherte letzte Fußgängerposition und nicht die tatsächliche Fahrzeugposition vor. In einem solchen Fall wird das Navigationsgerät in der Regel den relativ zeitintensiven Kaltstart durchführen müssen, um die aktuelle Position des Fahrzeugs zu ermitteln. Verwendet das mobile Navigationsgerät bei seiner Inbetriebnahme im Fahrzeug hingegen die von der aktuellen Fahrzeugposition abweichende Fußgängerposition als Startposition, kann dies aufgrund misslungener Versuche eine Navigation mithilfe der falschen Positionsinformation durchzuführen, zu weiteren Verzögerungen führen.

Es ist Aufgabe der Erfindung, ausgehend von diesem Stand der Technik, die Positionsbestimmung eines Navigationssystems insbesondere bei einer Inbetriebnahme in einer Konfiguration zu verbessern. Dies wird durch ein Verfahren nach Anspruch 1 gelöst. Ferner wird die Aufgabe durch ein Navigationssystem nach Anspruch 12, ein mobiles Navigationsgerät nach Anspruch 18 sowie eine Zusatzvor-richtung nach Anspruch 19 gelöst. Weitere vorteilhafte Ausführungsformen der Erfindung sind in den abhängigen Ansprüchen angegeben.

Das erfindungsgemäße Verfahren zum Betreiben eines mobilen Navigationsgerätes sieht vor, dass das mobile Navigationsgerät in einer Fahrzeug-Konfiguration, in der das mobile Navigationsgerät mit einer Zusatzvorrichtung gekoppelt ist, die jeweils aktuelle Position ermittelt. Dabei wird im Rahmen eines Wechsels zu einer mobilen Konfiguration die vom mobilen Navigationsgerät aktuell ermittelte Position in Form einer der jeweiligen Fahrzeug-Konfiguration zugeordneten Posi-tionsinformation gespeichert. Durch die Speicherung der aktuellen Position als eine der jeweiligen Fahrzeug-Konfiguration zugeordnete Positionsinformation steht dem Navigationsgerät beim Wiederherstellen der Fahrzeug-Konfiguration die letzte bekannte Position des jeweiligen Fahrzeugs auch dann zur Verfügung, wenn das Navigationsgerät zwischenzeitlich anderweitig verwendet wurde.

Mit dem erfindungsgemäßen Verfahren ist es somit möglich, das mobile Navigationsgerät in verschiedenen Konfigurationen zu verwenden, ohne dass sich hierdurch die aus dem Stand der Technik bekannten Verzögerungen bei der erneuten Inbetriebnahme des Geräts in einer bestimmten Konfiguration ergeben. Da die zuletzt gültige Position der jeweiligen Konfiguration in der Zusatzvorrichtung oder in dem Navigationsgerät gespeichert wird, steht sie dem Navigationssystem unmittelbar nach der erneuten Inbetriebnahme des Navigationsgerätes in der jeweiligen Konfiguration auch ohne Satellitenempfang und unabhängig davon, ob und wie das Navigationsgerät zwischenzeitlich genutzt wurde, zur Verfügung. Hierdurch ist es möglich zumindest einen Teil der Services des Navigationssystems unmittelbar nach der Inbetriebnahme des Navigationsgerätes zur Verfügung zu stellen. Auch die vollständige Zielführungsfunktionalität des Navigationssystems kann damit schneller zur Verfügung gestellt werden.

In einer vorteilhaften Ausführungsform der Erfindung ist vorgesehen, dass eine gespeicherte Positionsinformation, die einer bestimmten Fahrzeug-Konfiguration zugeordnet ist, dem mobilen Navigationsgerät beim Wiederherstellen der jeweiligen Fahrzeug-Konfiguration zur Bestimmung der aktuellen Position des jeweiligen Fahrzeugs wieder bereitgestellt wird. Hierdurch wird sichergestellt, dass dem Navigationsgerät beim Herstellen einer Konfiguration stets die zuletzt bekannte Position dieser Konfiguration zur Verfügung steht.

In einer weiter vorteilhaften Ausführungsform der Erfindung wird eine vom mobilen Navigationsgerät in der mobilen Konfiguration ermittelte aktuelle Position in Form einer weiteren Positionsinformation gespeichert, wenn das mobile Navigationsgerät ausgeschaltet oder in eine andere Konfiguration versetzt wird. Diese Positionsinformation wird dem mobilen Navigationsgerät zur Bestimmung seiner aktuellen Posi-tion bereitgestellt, wenn das mobile Navigationsgerät in der mobilen Konfiguration wieder in Betrieb genommen wird. Da die Positionsinformationen der mobilen Konfiguration und der Fahrzeug-Konfiguration unabhängig voneinander gespeichert vorliegen, kann jeder Konfiguration die jeweils zugehörige letzen Position zur Verfügung gestellt werden.

Eine vorteilhafte Ausführungsform sieht vor, dass die Positionsinfor-mationen jeweils im Zusammenhang mit einer der jeweiligen Konfiguration entsprechenden Konfigurationsinformation gespeichert werden. Aufgrund der mit gespeicherten Konfigurationsinformationen ist die Zuordnung einer gespeicherten Positionsinformation zu der jeweiligen Konfiguration sehr einfach möglich. Insbesondere wird es hierdurch ermöglicht, gleichzeitig Positionsinformationen beliebiger Konfigurationen zu speichern.

Gemäß einer weiteren vorteilhaften Ausführungsform der Erfindung wird beim Wiederherstellen einer bestimmten Fahrzeug-Konfiguration oder allgemeiner gesagt bei der Inbetriebnahme des mobilen Navigationsgeräts in der jeweiligen Fahrzeug-Konfiguration eine der jeweiligen Konfiguration entsprechende aktuelle Konfigurationsinformation ermittelt. Dabei wird eine gespeicherte Positionsinformation dem Navigationsgerät nur dann zur Bestimmung der aktuellen Position bereitgestellt, wenn die im Zusammenhang mit der jeweiligen Positionsinformation gespeicherte Konfigurationsinformation mit der aktuell ermittelten Konfigurationsinformation übereinstimmt. Hierdurch wird sichergestellt, dass dem Navigationsgerät eine Positionsinformation nur dann zur Verfügung gestellt wird, wenn eine entsprechende Positions-information für die jeweilige Konfiguration vorliegt.

In einer weitern Ausführungsform der Erfindung ist vorgesehen, dass überprüft wird, ob sich seit der Speicherung einer Positionsinformation, die einer bestimmten Fahrzeug-Konfiguration zugeordnet ist, die Position des jeweiligen Fahrzeugs geändert hat. Dabei wird die entsprechende Positionsinformation dem mobilen Navigationsgerät beim Wiederherstellen der jeweiligen Fahrzeug-Konfiguration oder allge-meiner bei der Inbetriebnahme des mobilen Navigationsgeräts in der jeweiligen Fahrzeug-Konfiguration nicht zur Bestimmung der aktuellen Position des jeweiligen Fahrzeugs bereitgestellt, wenn eine Positionsänderung festgestellt wird, die einen vorgegebenen Wert überschreitet.

Ferner ist gemäß einer weiteren Ausführungsform der Erfindung in dem Fall, dass beim Wiederherstellen einer Konfiguration oder bei der Inbetriebnahme des mobilen Navigationsgeräts in der jeweiligen Konfiguration mehrere Positionsinformationen gespeichert vorliegen, vorgesehen dass nur diejenige Positionsinformation zur Bestimmung der aktuellen Position verwendet wird, deren zugeordnete Konfigurationsinformation der aktuellen Konfiguration entspricht. Hierdurch kann insbesondere bei einer flexiblen Nutzung des erfindungsgemäßen Navigationssystems, beispielsweise bei Verwendung mehrerer Navigationsgeräte und Fahrzeuge, sichergestellt werden, dass beim Herstellen einer bestimmten Konfiguration stets die jeweils zugeordnete letzte Position der jeweiligen Konfiguration bereitgestellt wird.

In einer weiteren vorteilhaften Ausführungsform der Erfindung wird beim Wiederherstellen einer Konfiguration oder bei der Inbetriebnahme des mobilen Navigationsgeräts in der jeweiligen Konfiguration nicht die im Zusammenhang mit der Konfigurationsinformation der jeweiligen Konfiguration gespeicherte Positionsinformation, sondern eine andere gespeicherte Positionsinformation zur Bestimmung der aktuellen Position verwendet, wenn sich die andere Positionsinformation im Vergleich zur ersteren plausibler in Bezug auf die aktuelle Position erweist. Durch dieses Vorgehen kann die Positionsbestimmung beispielsweise in dem Fall verbessert werden, wenn die zu einer aktuellen Fahrzeug-Konfiguration gespeicherte Positionsinformation nicht mehr aktuell ist, weil sich die Position des Fahrzeug seit ihrer Speicherung geändert hat. Durch die Verwendung einer Positionsinformation, die zwar einer anderen Konfiguration zugeordnet jedoch plausib-ler in Bezug auf die aktuelle Position ist, kann die Bestimmung der eigenen Position verbessert werden.

Eine weitere vorteilhafte Ausführungsform der Erfindung sieht vor, dass eine Konfigurationsinformation anhand einer Kennung bzw. einer Eigenschaft des mobilen Navigationsgerätes, der jeweiligen Zusatzvorrichtung oder des jeweiligen Fahrzeugs ermittelt wird. Durch die Verwendung einer individuellen Kennung lassen sich beliebig viele Konfigurationen realisieren. Wird die Konfigurationsinformation anhand einer Eigenschaft ermittelt, lässt sich das Navigationsgerät auch im Zusammenhang mit Zusatzvorrichtungen bzw. Fahrzeugen verwenden, die über keine entsprechende Kennung verfügen.

Weiterhin ist in einer vorteilhaften Ausführungsform vorgesehen, dass die Speicherung der Positionsinformationen im mobilen Navigationsgerät bzw. in einer Zusatzvorrichtung erfolgt. Eine Speicherung der letzen Position im Navigationsgerät ermöglicht einen universellen Einsatz des Navigationsgerätes. Ferner kann in diesem Fall anhand der gespeicherten Positionsinformation ein Auffinden des Fahrzeugs bzw. Navigation zu der zuletzt bekannten Fahrzeug-Position durchgeführt werden. In dem Fall, dass die letzte Position innerhalb der Zusatzvorrichtung gespeichert wird, steht sie auch für weitere mobile Navigati-onsgeräte zur Verfügung, die mit der Zusatzvorrichtung bzw. in dem die Zusatzvorrichtung aufweisenden Fahrzeug verwendet werden.

Im Folgenden wird die Erfindung anhand von Figuren näher dargestellt. Es zeigen:
Fig. 1 ein erfindungsgemäßes Navigationssystem mit einem mobilen Navigationsgerät in einer mobilen Konfiguration und einer Fahrzeughalterung;
Fig. 2 die Anordnung aus Figur 1 in einer schematischen Darstellung;
Fig. 3 das erfindungsgemäße Navigationssystem mit dem mobilen Navigationsgerät in einer Fahrzeug-Konfiguration;
Fig. 4 die Anordnung aus Figur 3 in einer schematischen Darstellung;
Fig. 5 schematisch das mobile Navigationsgerät in einer weiteren Fahrzeug-Konfiguration;
Fig. 6 schematisch eine Speichereinrichtung mit einem mehrere Positionsinformationen und zugehörige Konfigurationsinformationen enthaltenden Datensatz;
Fig. 7 schematisch die Verwendung eines mobilen Navigationsgeräts im Zusammenhang mit zwei verschiedenen Fahrzeugen; und
Fig. 8 schematisch die Verwendung zwei verschiedener mobiler Navigationsgeräte im Zusammenhang mit einem Fahrzeug.

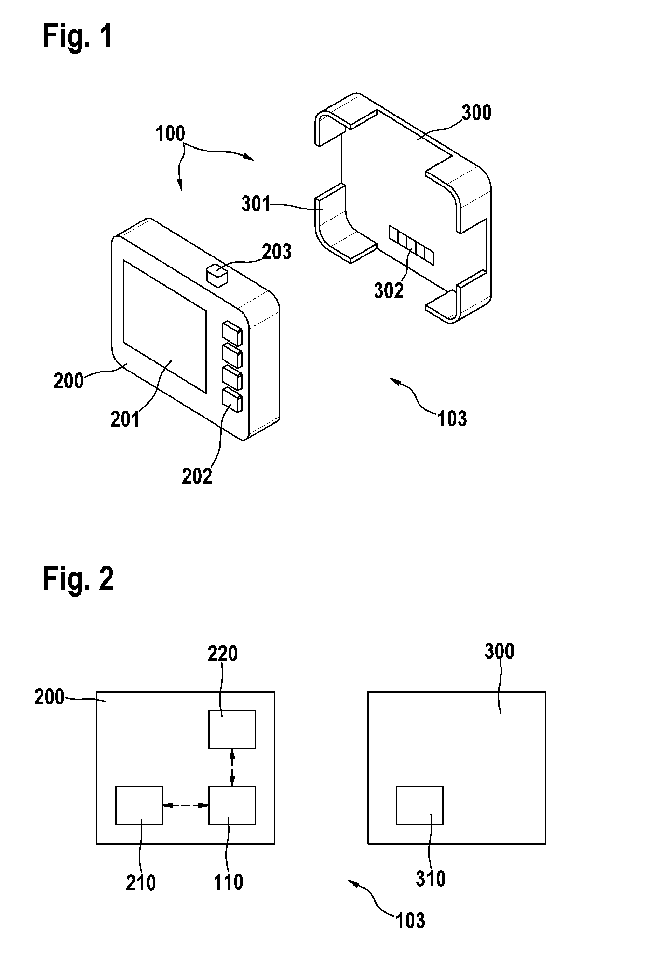

Die Figur 1 zeigt ein erfindungsgemäßes Navigationssystem 100 umfassend ein mobiles Navigationsgerät 200 und eine Zusatzvorrichtung 300, die im vorliegenden Fall als eine Fahrzeughalterung für das mobile Navigationsgerät 200 ausgebildet ist. Dabei sind Navigationsgerät 200 und Halterung 300 nicht miteinander verbunden, was beispiels-weise der Fall ist, wenn das Navigationsgerät 200 als Handgerät in einer mobilen Konfiguration 103 betrieben wird.

Das Navigationsgerät 200 weist zur Eingabe von Daten bzw. Befehlen sowie zur Ausgabe von Navigationsinformationen typischerweise entsprechende Einrichtungen auf, beispielsweise ein oder mehrere Bedienelemente 202 und ein Display 201. Zur Durchführung einer Navigation weist ein typisches Navigationsgerät ferner eine Datenverarbeitungseinheit sowie eine interne Speichereinrichtung auf, in der digita-les Kartenmaterial, und zusätzliche Informationen gespeichert sind (hier nicht gezeigt). Für den mobilen Einsatz ist ferner eine Empfangsantenne 203 als Teil einer internen Empfangseinrichtung vorhanden (hier ebenfalls nicht gezeigt).

Bei der Zusatzvorrichtung 300 aus Figur 1 handelt es sich beispiels-weise um eine in einem Fahrzeug installierbare Halterung für das Empfangsgerät 200. Eine dem Navigationsgerät 200 speziell angepasste Aufnahmeeinrichtung 301 der Halterung 300 dient der mecha-nischen Verbindung zum Navigationsgerät 200.

Bei einer aktiven Fahrzeughalterung 300, dem so genannten Cradle, sind ferner elektrische Kontakte 302 vorgesehen, die zusammen mit entsprechenden elektrischen Kontakten auf der Rückseite des Navigationsgerätes 200 eine elektrische Verbindung zwischen dem Navigationsgerät 200 und der Halterung 300 ermöglichen. Hiermit kann dem mobilen Navigationsgerät 200 neben einer externen Stromversorgung oder einer externen Empfangsantenne auch eine Schnittstelle für den Austausch von Daten sowie weiteren Informationen, wie z. B. Audio, bereitgestellt werden.

Die Figur 2 zeigt eine schematische Darstellung der Anordnung aus Figur 1. Das Navigationsgerät 200 umfasst eine Steuereinrichtung 110, mit deren Hilfe die Verwendung der anfallenden Positionsinformationen gesteuert wird. Insbesondere entscheidet die Steuereinrichtung 110, ob eine verfügbare Positionsinformation bzw. welche von mehreren verfügbaren Positionsinformationen 511,521,531 beim Her-stellen einer bestimmten Konfiguration 101,102,103 zur Bestimmung der aktuellen Position verwendet wird. Im vorliegenden Beispiel umfasst das Navigationsgerät 200 auch eine Speichereinrichtung 210 zum Speichern der Positionsinformationen sowie eine weitere Einrichtung 220 zur Detektion der aktuellen Konfiguration.

Die Steuereinrichtung 110 legt eine beim Verlassen einer bestimmten Konfiguration 101,102,103 bzw. beim Ausschalten des Navigationsgerätes 200 in der jeweiligen Konfiguration 101,102,103 zuletzt ermittelte Position in der Speichereinrichtung 210 in Form einer Positionsinformation 511,521,531 ab. Die Positionsinformation wird dabei im Zusammenhang mit einer der jeweiligen Konfiguration entsprechenden Konfigurationsinformation vorzugsweise nichtflüchtig abgelegt. Hierzu ermittelt die Einrichtung 220 die aktuelle Konfiguration 101,102,103 des Navigationsgeräts 200 und stellt der Steuereinrichtung 210 an-schließend eine der aktuellen Konfiguration entsprechende Konfigura-tionsinformation 512,522,532 bereit.

Beim Wiederherstellen einer Konfiguration 101, 102,103 bzw. bei einer erneuten Inbetriebnahme des Navigationsgeräts 200 in der jeweiligen Konfiguration 101,102,103 verwendet die Steuereinrichtung 110 die ihm von der Einrichtung 220 aktuell bereitgestellte Konfigurationsinformation 512,522,532 hingegen zum Auffinden einer zugehörigen Positionsinformation bzw. zur Auswahl einer geeigneten Positionsin-formation aus mehreren gespeichert vorliegenden Positionsinformati-onen 511,521,531.

Insbesondere überprüft die Steuereinrichtung 110, ob sich an einem der Steuereinrichtung 110 zugänglichen Speicherort 210,310 eine Positionsinformation 511,521,531 findet, deren zugeordnete Konfigurationsinformation 512,522,532 mit der aktuell bereitgestellten Konfigurationsinformation übereinstimmt. Ist dies der Fall, so kann die Steuereinrichtung 110 die betreffende Positionsinformation zur Be-stimmung der aktuellen Position heranziehen. Falls die betreffende Positionsinformation jedoch als nicht mehr zutreffend bzw. als ungültig eingestuft wird, kann die Steuereinrichtung 110 entscheiden, ob diese Positionsinformation gegebenenfalls verworfen und stattdessen eine aktuellere bzw. in Bezug auf die tatsächliche Position plausiblere Positionsinformation verwendet werden soll.

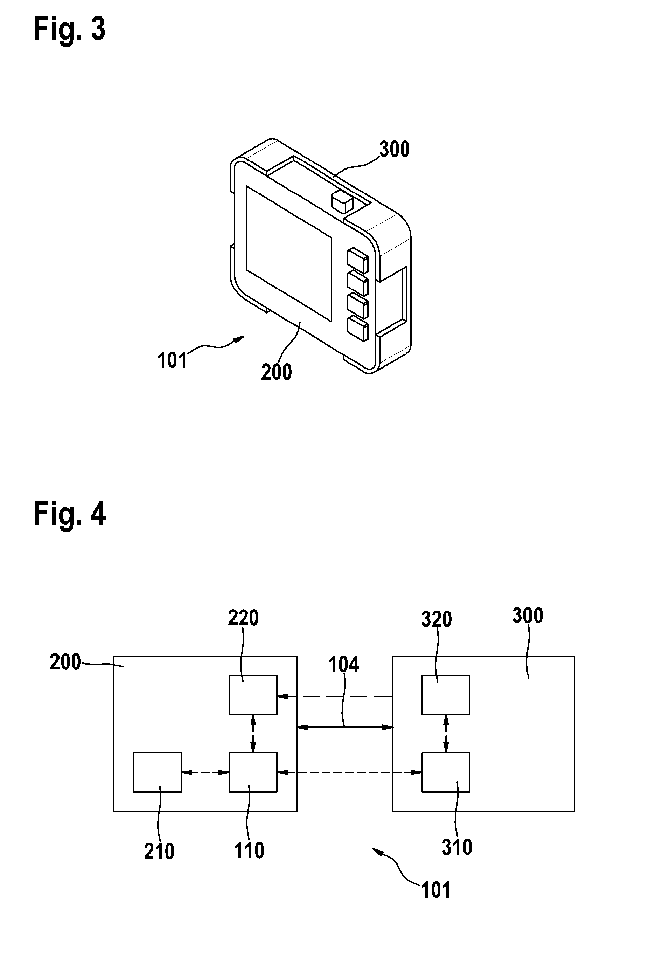

Die Figur 3 zeigt das mobile Navigationsgerät 200 nach dem Herstellen der ersten Fahrzeug-Konfiguration 101, in der das Navigationsgerät 200 mit der Halterung 300 des Fahrzeugs 600 gekoppelt ist. Die Kopplung wird durch Einstecken des Navigationsgeräts 200 in die Aufnahme der Halterung 300 erzielt, wobei die beiden Komponenten im vorliegenden Beispiel sowohl mechanisch als auch über entsprechende Kontakte 302 elektrisch miteinander verbunden sind. Dabei wird auch eine Datenverbindung zwischen dem Navigationsgerät 200 und der Halterung 300 hergestellt, die der Steuereinrichtung 110 des Navigationsgeräts 200 einen Zugriff auf die Speichereinrichtung 310 der Halterung 300 erlaubt. Die Figur 4 zeigt die Anordnung der beiden Komponenten 200,300 aus Figur 3 in einer schematischen Darstellung, wobei die Kopplung zwischen den beiden Komponenten 200,300 mithilfe eines Pfeils 104 veranschaulicht ist. Beim Einstecken des Navigationsgeräts 200 in die Halterung 300 erkennt die Einrichtung 220 die aktuelle Fahrzeug-Konfiguration 101 anhand einer bestimmten Eigenschaft der Halterung 300 bzw. des jeweiligen Fahrzeugs 600 oder anhand einer von der Halterung 300 empfangenen Kennung und stellt der Steuereinrichtung 110 eine entsprechenden Konfigurationsinformation 512 bereit. Die Steuereinrichtung 110 prüft daraufhin, ob in der Speichereinrichtung 210 des Navigationsgeräts 200 und/oder in der Speichereinrichtung 310 der Halterung 300 eine der jeweiligen Konfigurationsinformation 512 zugeordnete Positionsinformation 511 gespeichert vorliegt. Findet die Steuereinrichtung 110 eine entsprechende Positionsinformation 511, so verwendet es diese als aktuelle Position bzw. als Ausgangsposition zur Verifikation der aktuellen Position. Anderenfalls oder in dem Fall, dass sich die zugehörige Positionsinformation als nicht mehr aktuell erweist, kann das Navigationsgerät 200 auch eine andere Positionsinformation 521, 531 aus der jeweiligen Speichereinrichtung 210, 310 verwenden. Dabei kann auch überprüft werden, ob die gefundene Positionsinformation 521, 531 noch plausibel in Bezug auf die aktuelle Position ist. Dies könnte insbesondere dann nicht mehr gewährleistet sein, wenn sich die Position der Zusatzvorrichtung 300 bzw. des Fahrzeugs 600 seit der Speicherung der jeweiligen Positionsinformation 521,531 geändert hat. Zum Feststellen einer solchen Positionsänderung kann beispielsweise ein innerhalb der Halterung 300 angeordneter Bewegungsdetektor 320 verwendet werden. Mit seiner Hilfe kann die Halterung 300 erkennen, ob sie sich noch an der gleichen Position befindet, d.h. ob sie die ganze Zeit mit dem Fahrzeug 600 verbunden war und das Fahrzeug 600 in dieser Zeit auch nicht bewegt wurde. Grundsätzlich lässt sich eine Bewegung des Fahrzeugs auch mithilfe anderer Sensoreinrichtungen erfassen, beispielsweise anhand des Odometersignals.

Sofern eine Positionsänderung festgestellt wird, die einen vorgegebenen Wert überschreitet, wenn beispielsweise das Fahrzeug 600 seit der Speicherung der letzten Position mehr als 100m weit bewegt wurde, kann die jeweilige Positionsinformation 511 als ungültig deklariert bzw. ganz verworfen werden. Alternativ kann die jeweilige Positionsinformation 511 trotz einer festgestellten Positionsänderung als aktuelle Position verwendet werden, wobei lediglich die Anzahl der verfügbaren Services reduziert wird. Beispielsweise kann die jeweilige Positionsinformation 511 zwar noch zur Berechnung einer Route nicht jedoch auch zur aktiven Zielführung zugelassen werden.

Alternativ zu der automatischen Auswahl der für eine bestimmte Konfiguration geeigneten Positionsinformation kann dem Benutzer auch ein Dialog bereitgestellt werden, mit dem er darüber entscheiden kann, ob die jeweilige Positionsinformation und sofern mehrere Positionsinformationen bereitstehen, welche dieser Positionsinformationen verwendet werden soll.

Liegt dem Navigationsgerät 200 bereits schon vor dem Herstellen der Fahrzeug-Konfiguration 101 eine gesicherte aktuelle Position vor, beispielsweise weil das Navigationsgerät 200 noch kurz vorher im Fußgängermodus betrieben wurde, kann mithilfe einer dem Navigationsgerät bereitgestellten plausiblen letzten Fahrzeugposition diese aktuelle Position gegebenenfalls noch weiter verbessert werden.

Mit der so aktualisierten Position ist grundsätzlich eine schnellere Berechnung der optimalen Route bzw. eine schnellere Bereitstellung verschiedener Funktionen wie beispielsweise Fahrempfehlungen möglich, da die Satelliten gleich an der richtigen Stelle gesucht werden.

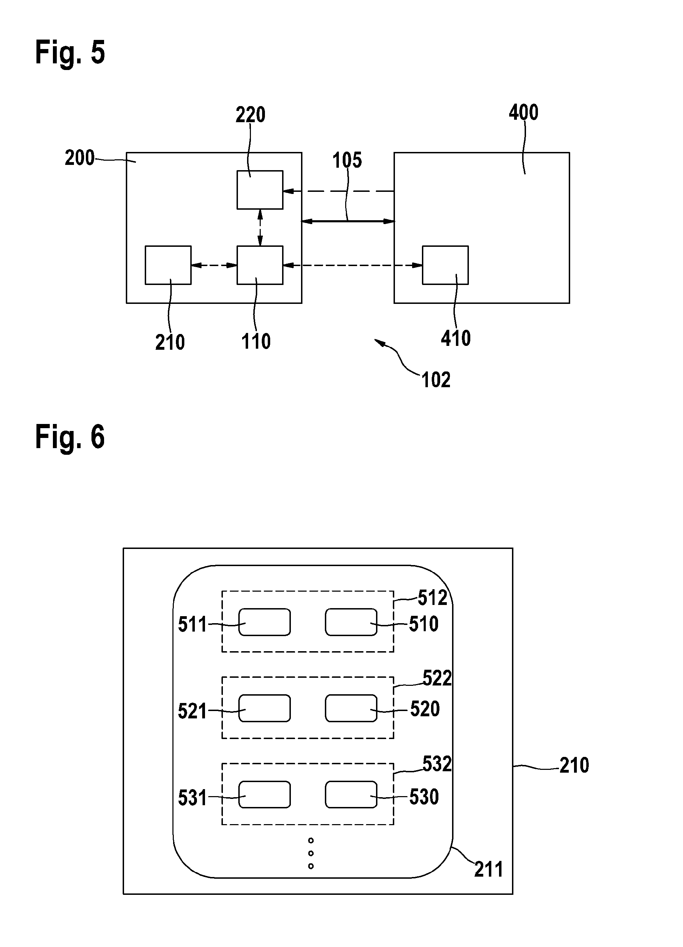

Die Figur 5 zeigt das mobile Navigationsgerät 200 in einer zweiten Fahrzeug-Konfiguration 102, wobei das Navigationsgerät 200 mit einer Zusatzvorrichtung 400 des zweiten Fahrzeugs 700 gekoppelt ist. Sofern das Navigationsgerät 200 zuvor lediglich in anderen Konfigurationen 101,103 betrieben wurde, und daher noch keine Informationen zu der aktuellen Konfiguration 102 in seiner Speichereinrichtung 210 vorhanden sind, kann die Steuereinrichtung 110 überprüfen, ob die Speichereinrichtung 410 der zweiten Zusatzvorrichtung 400 eine Positionsinformation enthält, die noch ausreichend plausibel in Bezug auf die aktuelle Position ist. Wenn das der Fall ist, kann das Navigationsgerät 200 trotz der Tatsache, dass ihm keine der aktuellen Konfiguration 102 zugeordnete Positionsinformation 522 zur Verfügung steht, eine Bestimmung der aktuellen Position anhand der gefundenen fremden Positionsinformation durchführen.

Die Figur 6 zeigt beispielhaft die Speichereinrichtung 210 des mobilen Navigationsgerätes 200, in der die Positionsinformationen 511, 521, 531 und die Konfigurationsinformationen 512, 522, 532 in einem separaten Datensatz 211 gespeichert vorliegen. Dabei ist jede Positionsinformation 511, 521, 531 in Zusammenhang mit der jeweiligen Konfigurationsinformation 512, 522, 532 abgelegt. Dies kann, wie in Figur 6 durch die gestrichelte Linien angedeutet, durch Verwen-dung einer gemeinsamen Datenstruktur 510, 520, 530 erfolgen. Alternativ lassen sich die Positionsinformationen 511, 521, 531 und die Konfigurationsinformation 512, 522, 532 auch in jeweils separaten Datenstrukturen speichern und mithilfe geeigneter Verlinkungen miteinander in Verbindung bringen. Ferner können verschiedene, jeweils einer bestimmten Konfiguration vorübergehend oder dauerhaft zugewiesene Speicherorte zum Ablegen der Positionsinformationen verwendet werden. So lässt sich beispielsweise ein erster logischer oder physikalischer Speicherbereich der Speichereinrichtung 220 der ersten Konfiguration 101 dauerhaft zuordnen, während ein zweiter logischer oder physikalischer Speicherbereich der Speichereinrichtung 220 der zweiten Konfiguration 102 dauerhaft zugeordnet wird.

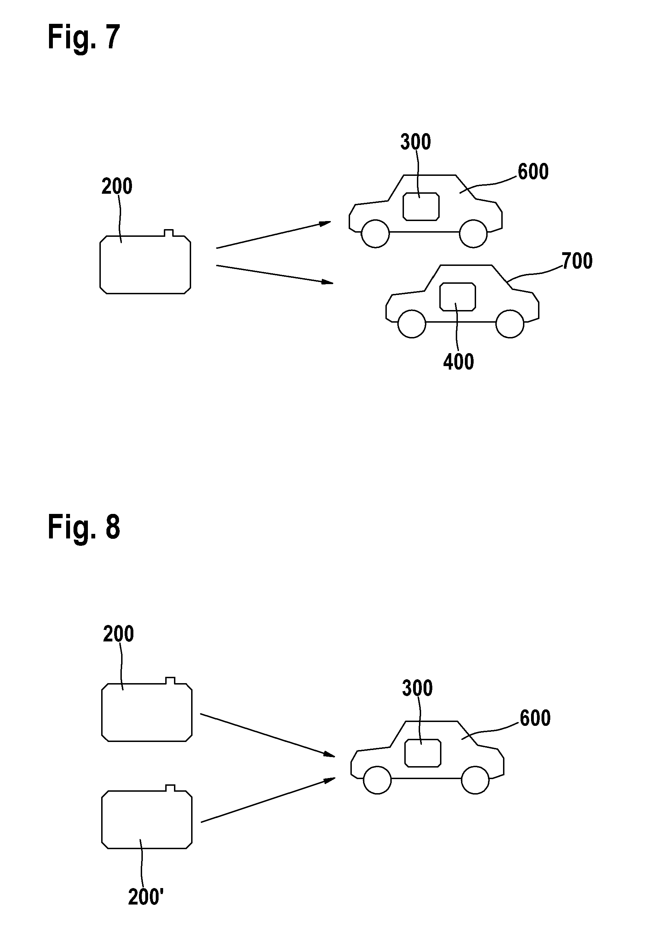

Die Figur 7 zeigt eine mögliche Verwendung des erfindungsgemäßen Navigationsgeräts 200 in verschiednen Fahrzeugen 600, 700. Beim Herstellen einer bestimmten Fahrzeug-Konfiguration 101, 102 durch Verbinden des Navigationsgeräts 200 mit der Halterung 300, 400 des jeweiligen Fahrzeugs 600,700 ermittelt das Navigationsgerät die jeweilige Konfigurationsinformation 511,522 beispielsweise anhand ei-ner von der jeweiligen Halterung 300,400 empfangenen Kennung oder einer von Navigationsgerät 200 detektierten Eigenschaft des jeweiligen Fahrzeugs 600, 700. Anschließend überprüft das Navigationsgerät 200, ob ihm eine der jeweiligen Konfiguration 101, 102 entsprechende Positionsinformation 511, 521 zur Verfügung steht. Ist dies der Fall, dann verwendet das Navigationsgerät 200 diese Positi-onsinformation als aktuelle Position des jeweiligen Fahrzeugs 600,700.

Die Figur 8 zeigt eine mögliche Verwendung der erfindungsgemäßen Zusatzvorrichtung 300 in Verbindung mit verschiedenen mobilen Navigationsgeräten 200, 200'. In diesem Fall ist es sinnvoll, die ermittelten letzten Positionen der Fahrzeuge 600,700 in den jeweiligen Zusatzvorrichtungen 300 abzulegen. Beim Herstellen einer bestimmten Fahrzeug-Konfiguration 101, 102 steht dann die jeweils zugehörige Positionsinformation 511, 521 dem Navigationsgerät 200 zur Bestimmung der aktuellen Position zu Verfügung, und zwar unabhängig davon, welches der Navigationsgeräte 200, 200' verwendet wird.

Die hier beschriebene automatische Erkennung der aktuellen Konfiguration kann auch zur automatischen Umschaltung zwischen verschiedenen Betriebsmodi des Navigationsgerätes 200 verwendet werden. Beispielsweise kann das Navigationsgerät 200 automatisch zwischen einem Fußgänger- und einem Fahrzeugmodus umschalten, wenn es in die Halterung 300 hineingesteckt wird. Dabei werden Geschwindigkeitsprofile, Routenoptionen etc. automatisch angepasst. Ferner lassen sich damit auch spezifische Fahrerprofile aktivieren, die für das jeweilige Fahrzeug 600, 700 typisch sind.

Das Erkennen eines bestimmten Fahrzeugs bei Verwendung eines Navigationsgerätes 200 mit mehreren Fahrzeugen 600,700 kann grundsätzlich auf verschiedenste Weise erfolgen. So können beispielsweise die Halterungen 300,400 der jeweiligen Fahrzeuge 600,700 unterschiedliche Kennungen aufweisen. Ferner kann eine Kennung des jeweiligen Fahrzeugs ausgelesen werden, beispielsweise als ein auf der Versorgungsspannung anliegende Fahrzeug-ID. Darüber hinaus ist es auch möglich, die Fahrzeuge 600,700 mit Hilfe einer eingebauten Kamera auseinander zu halten (beispielsweise anhand verschieden farbiger Motorhauben). Auch der akustische Fin-gerabdruck eines Fahrzeugs kann zu seiner Identifikation verwendet werden. So kann beispielsweise das Navigationsgerät 200 mithilfe ei-nes für die Sprachsteuerung vorgesehenen Mikrofons Fahrzeuge an-hand ihrer typischen Innengeräusche unterscheiden. Auch weitere Merkmale eines Fahrzeugs, wie beispielsweise seine konkrete Bordspannung, seine spezifische Anlasskurve bzw. Störpegel auf der Spannungsversorgung lassen sich hierzu nutzen.

Obwohl die Kopplung des Navigationsgeräts mit der Zusatzvorrichtung in der vorhergehenden Beschreibung nur als mechanische und elektrische Verbindung offenbart wurde, kommt hierfür grundsätzlich jede Art von Verbindung in Frage, bei der eine mechanische, elektri-sche oder sonstige Wirkung zwischen dem mobilen Navigationsgerät und einer Zusatzvorrichtung übertragbar ist. So kann eine Fahrzeug-Konfiguration beispielsweise auch durch den Aufbau einer drahtlosen Datenverbindung zwischen dem Navigationsgerät 200 und der Zusatzvorrichtung 300 hergestellt werden.

Obwohl in der vorhergehenden Beschreibung die Zusatzvorrichtung 300,400 lediglich als eine Fahrzeughalterung offenbart wurde, kommt hierfür grundsätzlich jede in einem Fahrzeug installierte bzw. installierbare Vorrichtung in Frage. Beispielsweise kann an das Navigationsgerät 200 ein externer GPS-Stecker angeschlossen werden. Da externe Antennen in der Regel fest im Fahrzeug verkabelt sind, kann auch das Einstecken bzw. Abziehen des Steckerteils einer externern Antenne als Trigger für den oben beschriebnen Konfigurations-Wechsel und die damit verbundene Speicherung bzw. Bereitstellung der jeweiligen Positionsinformation verwendet werden.

Der in der vorhergehenden Beschreibung sowie in den Ansprüchen verwendete Begriff "mobiles Navigationsgerät" bezieht sich nicht nur auf das hier beispielhaft dargestellte PND, sondern grundsätzlich auch auf andere transportable Geräte mit einer entsprechenden Positionsbestimmung. Als mobiles Navigationsgerät im Sinne der Erfindung kommt daher beispielsweise auch ein PDA (Personal Digital As-sistent) oder ein Mobiltelefon mit Navigationsfunktion sowie ein Gerät zur Erfassung von Mautgebühren bzw. zur Erfassung der gefahrenen Strecke in Frage. Solche mobilen Empfangsgeräte können in verschiedenen Fahrzeugen betrieben und dabei jeweils auch ohne entsprechende Halterung beispielsweise über Saugknöpfe in dem jeweiligen Fahrzeug befestigt werden.

## Patentansprüche

1. Verfahren zum Betreiben eines mobilen Navigationsgerätes (200),
wobei das mobile Navigationsgerät (200) in einer Fahrzeug-Konfiguration (101,102), in der das mobile Navigationsgerät (200) mit einer Zusatzvorrichtung (300,400) eines Fahrzeugs (600,700) gekoppelt ist, die jeweils aktuelle Position des jeweiligen Fahrzeugs (600,700) ermittelt, und
wobei im Rahmen eines Wechsels zu einer mobilen Konfiguration (103), in der das mobile Navigationsgerät (200) von der jeweiligen Zusatzvorrichtung (300,400) entkoppelt ist, eine vom mobilen Navigationsgerät (200) aktuell ermittelte Fahrzeug-Position in Form einer der jeweiligen Fahrzeug-Konfiguration (101,102) zugeordneten Positions-information (511,521) gespeichert wird.

2. Verfahren nach Anspruch 1,
wobei eine gespeicherte Positionsinformation (511,521), die einer bestimmten Fahrzeug-Konfiguration (101,102) zugeordnet ist, dem mobilen Navigationsgerät (200) beim Wiederherstellen der jeweiligen Fahrzeug-Konfiguration (101,102) zur Bestimmung der aktuellen Position des jeweiligen Fahrzeugs (600,700) wieder bereitgestellt wird.

3. Verfahren nach einem der vorhergehenden Ansprüche,
wobei das mobile Navigationsgerät (200) in der mobilen Konfiguration (103) die jeweils aktuelle Position ermittelt,
wobei die vom mobilen Navigationsgerät (200) aktuell ermittelte Posi-tion in Form einer weiteren Positionsinformation (531) unabhängig von der Fahrzeug-Konfiguration (101,102) zugeordneten Positionsinformation (511,521) gespeichert wird, wenn das mobile Navigationsgerät (200) ausgeschaltet wird oder wenn das mobile Navigationsgerät (200) in eine andere Konfiguration (101,102) wechselt, und
wobei die gespeicherte weitere Positionsinformation (531) dem mobilen Navigationsgerät (200) zur Bestimmung seiner aktuellen Position bereitgestellt wird, wenn das mobile Navigationsgerät (200) wieder eingeschaltet oder wenn die mobile Konfiguration (103) wieder herge+stellt wird.

4. Verfahren nach einem der vorhergehenden Ansprüche,
wobei eine Positionsinformation (511, 521, 531) im Zusammenhang mit einer der jeweiligen Konfiguration (101, 102, 103) entsprechenden Konfigurationsinformation (512, 522, 532) gespeichert wird.

5. Verfahren nach Anspruch 4,
wobei beim Wiederherstellen einer bestimmten Fahrzeug-Konfiguration (101,102) oder bei der Inbetriebnahme des mobilen Navigationsgeräts (200) in
der jeweiligen Fahrzeug-Konfiguration (101,102) eine der jeweiligen Konfiguration (101,102) entsprechende aktuelle Konfigurationsinformation (512,522) ermittelt wird, und
wobei eine gespeicherte Positionsinformation (511,521) dem mobilen Navigationsgerät (200) nur dann zur Bestimmung der aktuellen Position bereitgestellt wird, wenn die im Zusammenhang mit der jeweiligen Positionsinformation (511,521) gespeicherte Konfigurationsinformation (512,522) mit der aktuell ermittelten Konfigurationsinformation (512,522) übereinstimmt.

6. Verfahren nach einem der vorhergehenden Ansprüche 2 bis 5,
wobei überprüft wird, ob sich seit der Speicherung einer Positionsin-formation (511,521), die einer bestimmten Fahrzeug-Konfiguration (101,102) zugeordnet ist, die Position des jeweiligen Fahrzeugs (600,700) geändert hat, und
wobei die entsprechende Positionsinformation (511,521) dem mobilen Navigationsgerät (200) beim Wiederherstellen der jeweiligen Fahrzeug-Konfiguration (101,102) oder bei der Inbetriebnahme des mobilen Navigationsgeräts (200) in
der jeweiligen Fahrzeug-Konfiguration (101,102) nicht zur Bestimmung der aktuellen Position des jeweiligen Fahrzeugs (600,700) bereitgestellt wird, wenn eine Positionsänderung festgestellt wird, die einen vorgegebenen Wert überschreitet.

7. Verfahren nach einem der vorhergehenden Ansprüche,
wobei in dem Fall, dass beim Wiederherstellen einer Konfiguration (101,103,102) oder bei der Inbetriebnahme des mobilen Navigationsgeräts (200) in der jeweiligen Konfiguration (101,102,103) mehrere Positionsinformationen (511,521,531) gespeichert vorliegen, nur diejenige Positionsinformation (511,521,531) zur Bestimmung der aktuellen Position verwendet wird, deren zugeordnete Konfigurationsinfor-mation (512,522,532) der aktuellen Konfiguration (101,102,103) entspricht.

8. Verfahren nach einem der vorhergehenden Ansprüche,
wobei beim Wiederherstellen einer Konfiguration (101,102,103) oder bei der Inbetriebnahme des mobilen Navigationsgeräts (200) in der jeweiligen Konfiguration (101,102,103) nicht die im Zusammenhang mit der Konfigurationsinformation (512,522,532) der jeweiligen Konfiguration (101,102,103) gespeicherte Positionsinformation (511,521,531) zur Bestimmung der aktuellen Position verwendet wird, sondern eine andere gespeicherte Positionsinformation (511,521,531), wenn sich die andere Positionsinformation (511,521,531) im Vergleich zu der im Zusammenhang mit der Konfigurationsinformation (512,522,532) der jeweiligen Konfiguration (101,102,103) gespeicherte Positionsinformation (511,521,531) plau-sibler in Bezug auf die aktuelle Position erweist.

9. Verfahren nach einem der vorhergehenden Ansprüche,
wobei das mobile Navigationsgerät (200) die ihm bereitgestellte Positionsinformation (511,521,531) als Startposition für eine Navigation und/oder zur Verifikation der aktuellen Position verwendet.

10. Verfahren nach einem der vorhergehenden Ansprüche 4 bis 9,
wobei die Konfigurationsinformation (512,522,532) einer Konfiguration (101,102,103) anhand einer Kennung und/oder einer Eigenschaft des mobilen Navigationsgerätes (200), der Zusatzvorrichtung (300) und/oder des die jeweilige Zusatzvorrichtung (300,400) umfassenden Fahrzeugs (600,700) ermittelt wird.

11. Verfahren nach einem der vorhergehenden Ansprüche,
wobei die Speicherung der Positionsinformationen (511,521,531) im mobilen Navigationsgerät (200) und/oder in einer Zusatzvorrichtung (300,400) erfolgt.

12. Navigationssystem (100) umfassend ein mobiles Navigationsgerät (200), eine Zusatzvorrichtung (300,400) für eine Fahrzeug (600,700) und eine Steuereinrichtung (110),
wobei das mobile Navigationsgerät (200) in einer Fahrzeug-Konfiguration (101,102) mit der Zusatzvorrichtung (300,400) gekoppelt und in einer mobilen Konfiguration (103) von der Zusatzvorrichtung (300,400) entkoppelt ist,
wobei das mobile Navigationsgerät (200) ausgebildet ist, in der Fahrzeug-Konfiguration (101,102) die jeweils aktuelle Position des jeweiligen Fahrzeugs (600,700) zu ermitteln, und
wobei die Steuereinrichtung (110) ausgebildet ist, eine im Rahmen eines Wechsels zu der mobilen Konfiguration (103) vom mobilen Navigationsgerät (200) aktuell ermittelte Fahrzeug-Position in Form einer der jeweiligen Fahrzeug-Konfiguration (101,102) zugeordneten Positionsinformation (511) zu speichern.

13. Navigationssystem (100) nach Anspruch 12,
wobei die Steuereinrichtung (110) ausgebildet ist, eine gespeicherte Fahrzeug-Positionsinformation (511,521), die einer bestimmten Fahrzeug-Konfiguration (101,102) zugeordnet ist, dem mobilen Navigationsgerät (200) beim Wiederherstellen der jeweiligen Fahrzeug-Konfiguration (101,102) wieder bereitzustellen, und
wobei das mobile Navigationsgerät (200) ausgebildet ist, die ihm bereitgestellte ersten Positionsinformation (511,521) zu Bestimmung der aktuellen Position des jeweiligen Fahrzeugs (600,700) zu verwenden.

14. Navigationssystem nach Anspruch 12 oder 13,
das mobile Navigationsgerät (200) oder die Zusatzvorrichtung (300,400) eine Speichereinrichtung (210,310,410) umfasst, und
wobei die Steuereinrichtung (110) ausgebildet ist, die Positionsinformationen (511,521,531) in der Speichereinrichtung (210,310,410) zu speichern.

15. Navigationssystem nach einem der Ansprüche 12 bis 14,
wobei die Steuereinrichtung (110) ausgebildet ist, eine Positionsinformation (511,521,531) im Zusammenhang mit einer der jeweiligen Konfiguration (101,103,102) entsprechenden Konfigurationsinformation (512,522,532) zu speichern.

16. Navigationssystem nach Anspruch 15,
wobei die Steuereinrichtung (110) ausgebildet ist, beim Wiederherstellen einer bestimmten Konfiguration (101,102,103) eine entsprechende Konfigurationsinformation (512,522,532) zu ermitteln, und
wobei die Steuereinrichtung (110) ferner ausgebildet ist, dem Navigationsendgerät (200) eine gespeicherte Positionsinformation (511,521,531) nur dann bereitzustellen, wenn die im Zusammenhang mit dieser Positionsinformation (511,521,531) gespeicherte Konfigurationsinformation (512,522,532) mit der aktuell ermittelten Konfigurationsinformation (512,522,532) übereinstimmt.

17. Navigationssystem nach Anspruch 16,
wobei die Steuereinrichtung (110) ausgebildet ist, eine Konfigurationsinformation (512,522,532) anhand einer Kennung und/oder einer Eigenschaft des mobilen Navigationsgeräts (200), der jeweiligen Zusatzvorrichtung (300,400) und/oder des jeweiligen Fahrzeugs (600,700) zu ermitteln.

18. Mobiles Navigationsgerät (200) für ein Navigationssystem (100) nach einem der Ansprüche 12 bis 17.

19. Zusatzvorrichtung (300) für ein Navigationssystem (100) nach einem der Ansprüche 12 bis 17.
